(19) Europäisches Patentamt
European Patent Office
Office européen des brevets

(11) EP 0 722 270 B1

(12) **EUROPEAN PATENT SPECIFICATION**

(45) Date of publication and mention
of the grant of the patent:
**18.02.1998 Bulletin 1998/08**

(21) Application number: **94928492.1**

(22) Date of filing: **07.10.1994**

(51) Int. Cl.⁶: $A22B\ 3/06$

(86) International application number:
**PCT/GB94/02193**

(87) International publication number:
**WO 95/10189 (20.04.1995 Gazette 1995/17)**

(54) **ELECTRICAL STUN/KILL APPARATUS**

VORRICHTUNG ZUM ELEKTRISCHEN BETÄUBEN/TÖTEN VON SCHLACHTTIEREN

APPAREIL ELECTRIQUE CONCU POUR ETOURDIR/ABATTRE UN ANIMAL

(84) Designated Contracting States:
**BE DE DK ES FR GB IE NL SE**

(30) Priority: **08.10.1993 GB 9320774**

(43) Date of publication of application:
**24.07.1996 Bulletin 1996/30**

(73) Proprietor:
**MEAT & LIVESTOCK COMMISSION**
**Snowdown Drive, Milton Keynes MK6 1AX (GB)**

(72) Inventor: **BROAD, Peter John**
**Birmingham B42 2JW (GB)**

(74) Representative:
**Skone James, Robert Edmund**
**GILL JENNINGS & EVERY**
**Broadgate House**
**7 Eldon Street**
**London EC2M 7LH (GB)**

(56) References cited:
EP-A- 0 060 527          WO-A-93/07757
DE-A- 2 135 900          DE-A- 3 233 372

• DATABASE WPI Week 8803, Derwent
Publications Ltd., London, GB; AN 88-014547 &
AU,A,7 131 387 (FRASER) 26 November 1987

## Description

The present invention relates to apparatus for passing electrical current through an animal, particularly a pig or sheep, with the purpose of killing or stunning the animal.

The use of electric shocks is a known method of either killing an animal, or stunning it prior to slaughter. Although the apparatus of the present invention is equally applicable to killing an animal, only stunning apparatus will be referred to hereafter for convenience.

The main purpose of stunning an animal prior to slaughter is to render it insensitive to pain.

The most relevant parameters which determine a successful stun are:

1) Stunning current;
2) Stunning period; and,
3) Electrode position. Current is applied by a pair of electrodes (typically a pair of tongs) which must be placed in the correct position.

An EEC Draft Proposal for the Protection of Animals at the Time of Killing specifies that an RMS level of 1.0A for sheep and 1.3A for pigs should be reached within 1 second, and maintained for at least 3 seconds. The optimum tong location using the industry standard scissor type tongs is between the animal's eyes and ears, whereby the stun current passes through the brain. Alternatively, the animal may be stunned "head-to-back".

A first type of conventional stunning system measures the electrical resistance between the tongs before stunning. If the resistance is below a certain value, typically approximately 20KΩ (indicating that there is some sort of object between the tongs), a fixed stun voltage is applied. This does not ensure that a certain minimum stun current is applied, and may also result in excessively high stun current (which has certain unwanted effects such as broken bones etc.).

DE-A-3233372 describes a second conventional stunning system which measures the animal's resistance during a stun, and varies the applied voltage in accordance with the measured resistance.

EP-A-0060527 describes a similar conventional stunning system which measures the animal's resistance and adapts the applied voltage accordingly.

DATABASE WPI, Week 8803, Derwent Publications Ltd., London, AN 88-014547, describes high voltage control apparatus for an animal stunner. The high voltage apparatus comprises a source of high voltage, a monitor, and is operable selectively to connect the electrodes either to the source or to the monitor. The monitor comprises a unit for distinguishing between an impedance state in which the impedance is below a selected value, and a second state in which the impedance is above a second selected value, and a third state in which the impedance is between those of the first two states.

In accordance with a first aspect of the present invention, apparatus for controlling the application of stun/kill voltage to an animal comprises means for applying a voltage to the animal; means to sense the impedance of the animal in response to the application of an impedance sensing voltage by the voltage applying means, the impedance sensing voltage being less than the stun/kill voltage; means for predicting from the sensed impedance the impedance of the animal when the stun/kill voltage is applied; and means for controlling the application of stun/kill voltage such that the stun/kill voltage is only applied if the predicted impedance is less than a predetermined impedance.

In accordance with a second aspect of the present invention, we provide a method of controlling the application of stun/kill voltage to an animal comprising applying an impedance sensing voltage to the animal, the impedance sensing voltage being less than the stun/kill voltage; sensing the impedance of the animal in response to the impedance sensing voltage; predicting from the sensed impedance the impedance of the animal when the stun/kill voltage is applied; and controlling the application of stun/kill voltage such that the stun/kill voltage is only applied if the predicted impedance is less than a predetermined impedance.

In contrast to the prior art which measures the DC electrical resistance either before or during the stun, the apparatus/method according to the present invention measures the impedance (i.e. resistance and capacitance and inductance) before stunning, and predicts the impedance during the stun. By ensuring that the impedance during stun/kill is below a certain value, this ensures that a certain minimum current passes through the animal when the stun/kill voltage is initially applied.

The stun/kill voltage comprises a voltage which is applied to the animal and is at least sufficient to stun the animal.

It has been recognised that the sensed impedance is less than the impedance during a stun. The impedance sensing voltage typically comprises an AC signal of approximately 8 volts (RMS). The sensing voltage is typically too low to penetrate the animal's head, and the current tends to travel around the periphery of the skull, possibly no further than the epidermis. In contrast, the higher stun/kill voltage (or indeed any voltage much higher than approximately 24V) will result in a current path across the brain.

This results in an effective impedance difference between the sensing and stun/kill modes. Typically the impedance increases by 12% ± 3% for pigs, and 8% ± 2% for sheep. Preferably, the impedance during a stun is calculated by multiplying the sensed impedance by an empirically predetermined factor. Typically, this is 1.12 for pigs, and 1.08 for sheep. Alternatively, the predicted impedance may be calculated as some other function of the sensed impedance and/or the stun voltage/frequency characteristics.

Preferably the impedance is sensed by forming a potential divider circuit including the animal, and passing a low voltage (eg. 8.3V RMS) AC signal through the potential divider. This is low in comparison to the stun voltage (which is of the order of hundreds of volts). To increase the sensing voltage much higher than 8V would cause discomfort to the animal in the event of an aborted stun.

Preferably, the apparatus further comprises means for monitoring the current being applied during the stun.

The applied stun voltage may be fixed. Alternatively, the stun voltage may be varied in response to the monitored current, in order to ensure that the current remains above a certain value.

A further problem with the prior art is that there is no automatic indication of the tong location, resulting in the problem of incorrect positioning of stunning tongs on animal's head. The "optimum location" is between the animal's eyes and ears when using the industry standard scissor type tongs. However, with open pen stunning, the slaughterman has the problem of restraining the animal for a duration long enough to ensure that the "optimum location" is reached. In practice this may prove to be an impossibility if the slaughterman has to chase the animal around the open pen in order to perform the stunning operation. It has been observed that the implications of this event encourages the slaughterman to grasp the animal at any convenient position, whilst using the stunning tongs, resulting in possible electrode contact to the neck, snout or, indeed, any other part of the animal. Accordingly, the requirement of supplementary sensing equipment designed to determine the location of the tongs prior to a stun commencing became apparent.

In accordance with a third aspect of the present invention, apparatus for sensing the position of a pair of electrodes on an animal's body comprises means for sensing an electrical characteristic of the animal by measuring the electrical response of the animal to an electrical signal applied by the electrodes; and means to provide an indication of the position of the electrodes in accordance with the measured response.

In accordance with a fourth aspect of the present invention, we provide a method of sensing the position of a pair of electrodes on an animal's body comprising applying an electrical signal to the animal via the electrodes; sensing an electrical characteristic of the animal by measuring the electrical response of the animal to the electrical signal; and providing an indication of the electrode position in accordance with the measured response.

Typically the electrodes comprise a pair of scissor type tongs, but they may be any suitable form of current/voltage applying means. For simplicity, reference shall only be made to tongs hereafter, but this should not be taken to limit the scope of the invention.

It has been discovered that an electrical characteristic (typically related to the capacitance/inductance of the intervening material) is associated with each part of an animal's body. Therefore an indication of the electrode position may be obtained by measuring the response of the animal to a sensing signal applied by the tongs.

Typically the sensing signal is generated by a fixed DC voltage source which is applied to one of the electrodes, and a measurement is made of the time taken for the voltage between the electrodes to reach a predetermined value. In this way a value related to the reactance (in particular, the capacitance) is obtained. However, any method of measuring a suitable electrical characteristic (such as the capacitance) is equally applicable to the third and fourth aspects of the invention.

In a preferred embodiment, the measured time is compared with a look up table containing a number o0f ranges of characteristic times. Each range of characteristic times is associated with a particular location on a particular species (eg. a sheep's head). If the measured time lies within a certain range, the indicating means indicates to an operator that the tongs are in the position associated with that range. Alternatively the electrode position may be determined by calculation.

The apparatus searches for and interprets the value of capacitance and or inductance associated with differing parts of any species. This capacitance/inductance is attributable to the differing levels of calcium found in bone and the water content of fatty tissue. For example, pigs or sheep have the following:

a) relatively dense areas of bone tissue close to the surface of the skull and accordingly, very small areas of fatty tissue/blood carrying artoids/veins.

b) with the neck, comparatively large sections of fatty tissue/blood, blood carrying artoids/veins and very small levels of calcium as the only "bony" part of the neck is the spine.

Both a) and b) above can also be descriptive to any human.

The electrical relationship associated with bone, tissue and the presence of water in blood or tissue, can be described as being a form of Electrolytic Capacitor.

The apparatus may merely be used to give an indication, before or after stun, of the tong position. Alternatively, or in addition, the sensed position may be used in controlling the application of stun/kill voltage. For example, stun/kill voltage may only be applied if the tongs are sensed as being in one or more predetermined positions (eg. across the head, or head to back). Preferably however, the sensor is only used to give an indication of tong position for information/operator training purposes, since it is undesirable to have to repeatedly reposition the tongs and deliver a mild electric shock.

Apparatus according to the first, and third aspects of the invention may typically be combined as may methods according to the second and fourth aspects of the invention. This provides a failsafe stun system which allows an operator to carry out a series of stuns at a certain minimum initial current, and may inform the operator at the end of the batch as to how many stuns have been applied in the correct position, or use the sensed tong location as part of the failsafe function.

A number of embodiments of the inventions will now be described with reference to the accompanying figures, in which:-

Figure 1 is a schematic block diagram of a first embodiment of the stunning control and monitor apparatus;
Figure 2 is a circuit diagram of the impedance sensor;
Figure 3 is a circuit diagram of the ADC conversion unit;
Figure 4 is a circuit diagram of the current sensor;
Figures 5 and 5a are circuit diagrams of the tong location sensor;
Figure 6 is a flow diagram illustrating a first example of a stunning cycle;
Figure 7 is a flow diagram illustrating a second example of a stunning cycle; and,
Figure 8 is a schematic block diagram of a second embodiment of the stunning control and monitor apparatus.

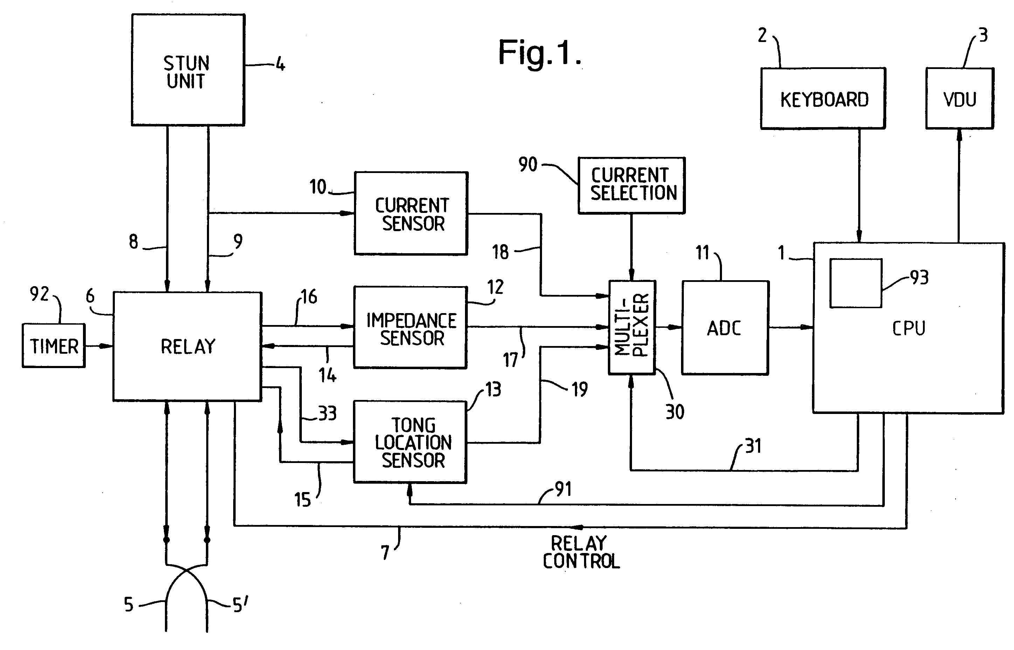

All the stun control, monitoring and recording functions are controlled by a microprocessor (1) shown in Figure 1, and this is accessed via a keyboard (2) on the front of the unit. A VDU (3) is provided to display information to the operator. All the equipment is housed in a waterproof cubicle suitable for the harsh environment experienced in a slaughterhouse.

The unit is fitted after a conventional stunning unit (4), which provides a stun voltage at its outputs (8,9).

Tongs (5,5') are connected to a relay (6), which switches between the various monitoring and control signals in response to relay control signals (7) generated by the main CPU (1).

The relay (6) is also connected to an impedance sensing circuit (12), tong location circuit (13) and current sensor circuit (10). The current sensor measures the current being applied by the stun unit (4) to the tongs (5,5'). The impedance circuit (12) applies an impedance sensing voltage to the tongs (5) via output (14), and determines the impedance from the response on input (16). The tong location circuit (13) applies a sensing voltage to output (15), and measures the response from input (33). The measurements from the sensing circuits (10,12,13) represented by signals (17,18,19) are input to a multiplexer (30) via respective inputs. Current selection circuit (90) is also connected to multiplexer (30). In response to operator input, the circuit (90) sets the desired minimum stun current to be applied to the animal.

The monitoring signals 17-19 are selectively input to Analogue-to-Digital Converter (ADC) (11), by Multiplexer 30 under control of control signals 31 from the CPU.

The control signals 7 and 31 select input/output conditions as follows:

1) When a stun voltage is to be applied, control signal (7) causes relay (6) to present the stun voltage on the inputs (8,9) to the tongs (5,5'). Control signal (31) connects current sensor signal (18) to ADC (11).
2) When impedance is to be measured, an impedance sensing signal from output (14) is applied to the tongs (5), and measurement signal (17) is input to the ADC (11).
3) When tong location is to be measured: tong location sensor measurement signal (19) is input to ADC (11), and tong location input (15) and output (33) are connected to the tongs.

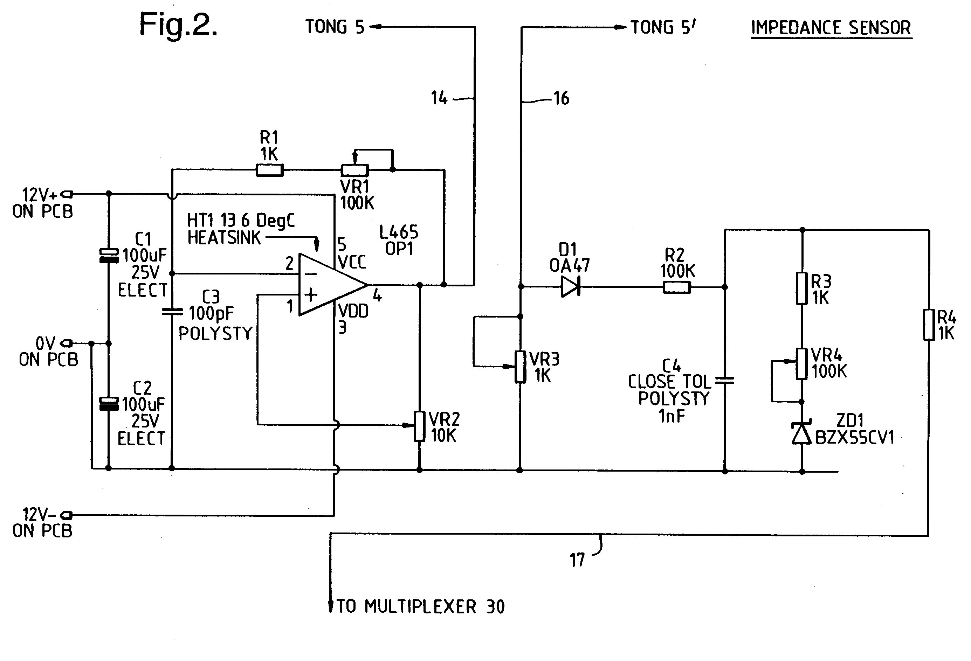

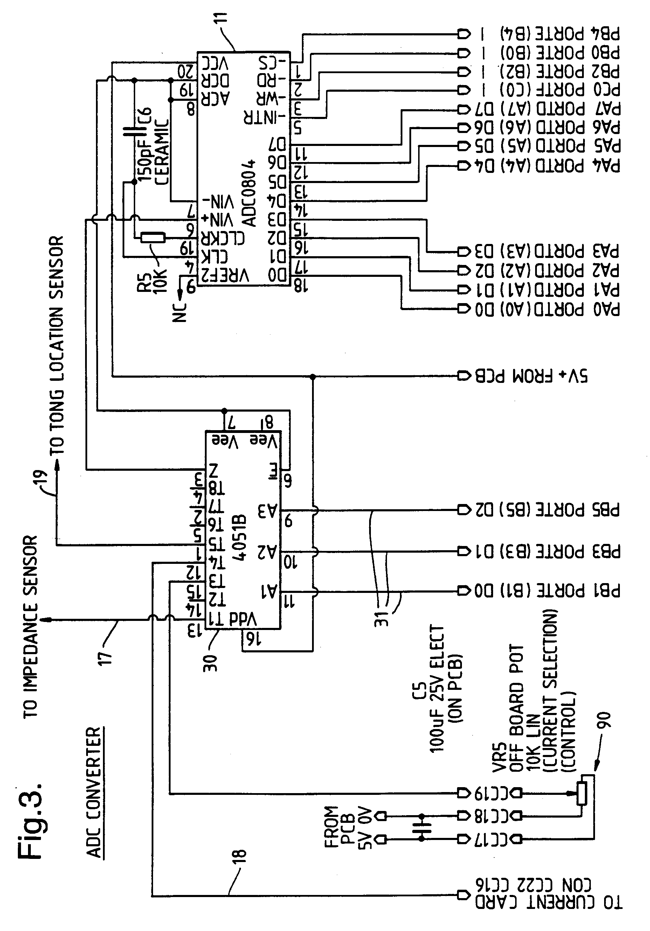

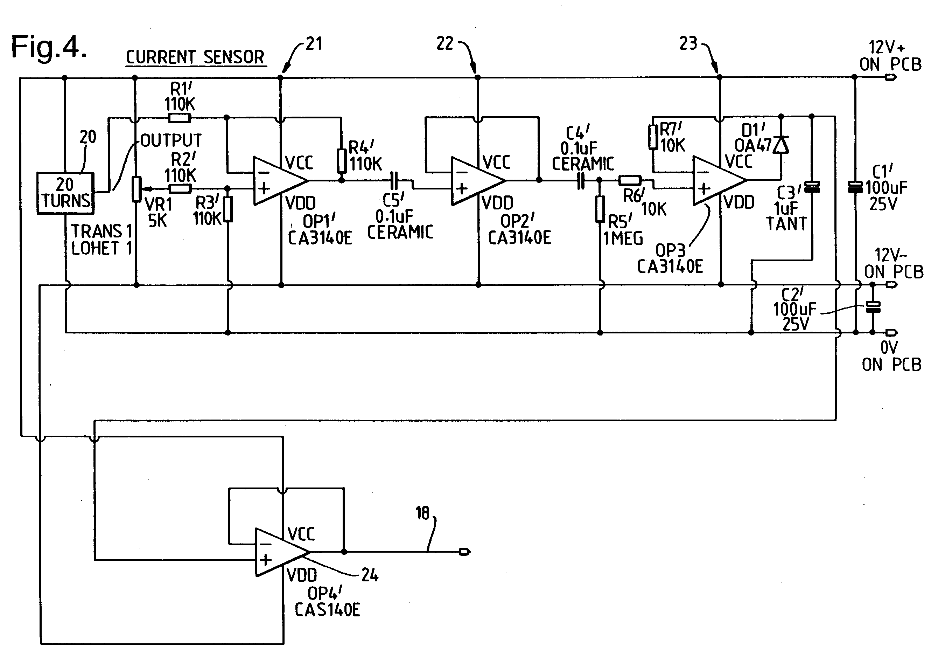

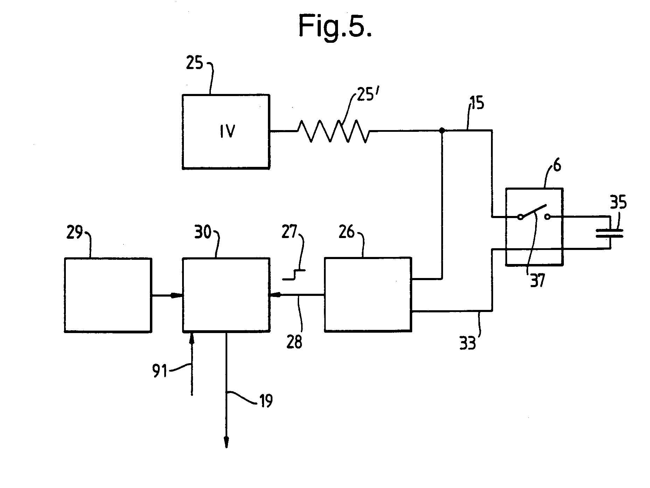

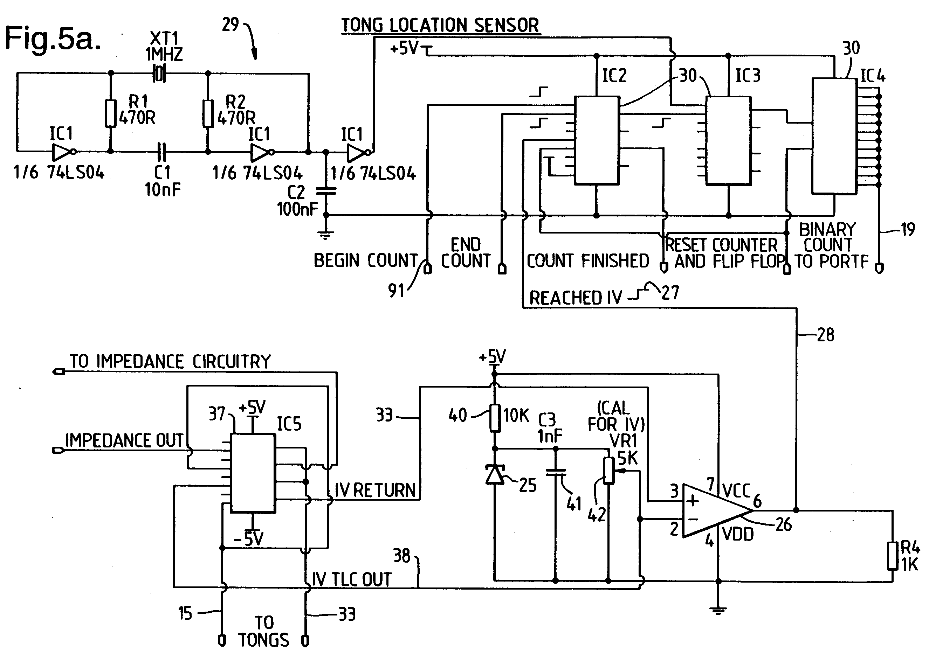

The impedance sensor (12) (Fig. 2), ADC (11) (Fig. 3), current sensor (10) (Fig. 4) and tong location sensor (13) (Fig. 5) will now be described in detail.

The impedance sensor (indicated schematically at 12 in Figure 1) is shown in detail in Figure 2.

The impedance sensor is built around two main circuit blocks i.e. generation of the 100 KHZ AC waveform and the DC rectification and interpretation of the returned voltage when the waveform is subject to a sampled load.

The impedance sensing circuit is connected to the tongs (5,5') via the lines (14,16) (and relay 6 - not shown).

The "heartbeat" of the unit comprises a power Op-Amp based circuit configured as a Schmitt trigger oscillator running at a frequency of 100Khz. The expected waveform, normally square is altered by selecting passive components which are running at close to their maximum operational values with respect to the frequency of 100Khz, the effect of this is to produce a waveform which begins to resemble a Sine curve with strong triangular components. It has been found that this waveform provides the best "searching" capability of the matter under investigation without the need for a high RMS voltage as would have normally been the case. The circuit is powered via a 12v+, 12V- supply, the RMS output of the waveform subsequently being around 8.2V RMS. Components C1 and C2 serve to decouple the supply rails from spikes and noise which would otherwise affect the mean RMS output from OP1.

The frequency of the waveform is set via R1, VR1 and C3, the amplitude via RV2. Due to the design of the circuit, the mark space ratio of the waveform is 50%.

This waveform is subjected to the matter under investigation via vr3, a 1k 22 turn potentiometer set at 500 ohm and to ground, thus the load in incorporation with the pot concludes a standard potential divider circuit driven from the AC waveform. The resulting AC voltage from the tap of the divider is wholly dependant on the physical impedance of the load. For example, if the load is 500 Ohms the output voltage will be 4.1V AC, if 1000 ohms then the output is 5.47V AC, as given by the equation $VL = ((8.2/R1*500)*R1)$.

The tapped off voltage from the junction of the load is presented to D1, R2 and C4 which provides half wave DC rectification. This rectified voltage is virtually ripple free due to the high AC frequency. The DC voltage is then subjected to a voltage limiting arrangement, via R3, VR4 and ZD1. This provides attenuation such that in the event of a short circuit across the tongs, the DC voltage which would normally be around 12 VDC is reduced to around 4.8 VDC, thus protecting the multiplexer, ADC and CPU as described later. R4 ensures enough drive current for the multiplexer to "latch" onto the output when selected for sampling.

The subsequent DC level from the impedance sensor, via R4, goes to pin 13 (channel1) on the multiplexer as indicated at 17.

The multiplexer 30 and ADC converter 11 are shown in Figure 3.

There are two main circuit blocks to the ADC conversion circuit i.e. the multiplexing block (30) which selects which of the four channels (current selection, current feedback, tong location and impedance) will be presented to the ADC block. And the ADC convertor itself (11) which transfers to the CPU a binary word relative to the magnitude of the DC voltage presented to it.

Each of the four inputs are connected to the respective pins on multiplexer 30, a 4051BE 8 to 1 multiplexer. The channel to be selected for sampling is selected by the 3-bit address configuration offered to pins 11,10 and 9 on IC1 from PORT E, under software control as follows:-

| Description | Channel no. | Multi address | | |
|---|---|---|---|---|
| | | A0 | A1 | A2 |
| Impedance Sensor (12) | 1 | 1 | 0 | 0 |
| Current Selection (90) | 3 | 1 | 1 | 0 |
| Current sensor (10) | 4 | 0 | 0 | 1 |
| Tong Location (13) | 5 | 1 | 0 | 1 |

Once selected, the relevant input channel selected is sent via the output pin 3 to the input of the ADC convertor 11. Due to the configuration of PORT E, the multiplexer address bus must remain latched during the entire sampling period. In order to accomplish this, the relevant channel code is added to whatever else PORT E is doing at the time of sampling, thus ensuring the relevant channel will remain latched during this period. NB The same criteria could have been accomplished in hardware via a latching buffer, but in order to keep hardware design to a minimum, the software approach described has been chosen.

As discussed, once the appropriate channel has been selected, the output of the multiplexer is presented to the input of the ADC. Also shown on Figure 3 is the current selector 90, which comprises a variable resistor VR5 which is situated on the front of the enclosure, serving as the means of entering the desired minimum current for the system to act upon. C5 serves merely to ensure freedom from spikes etc.

Current sensor 10 is shown in Figure 4.

The circuit for current feedback from the stun unit 4 consists of five circuit blocks shown in Figure 4, namely:-

0) A current transducer 20
1) A differential amplifier 21
2) A buffer amplifier 22
3) A peak picker 23
4) A buffer amplifier 24

Below is a description of each block.

0) The current transducer is an RS components sourced LOHET1 Linear Hall Effect device fitted into a tordial transformer. This device is rated at up to 50A, but by looping the current varying conductor 20 times through the transformer, this decreases its resolution by a factor of 20:1 down to 0 - 5A. Its output, with zero current lies midway between its supply rails (in this case 0 - 12V DC) which is 6VDC. When a current flows through the conductor, the magnetic field produced by the waveform is picked up by the tordial transformer, whereby the LOHET produces a perfect replica of the waveform, symmetrical to the 6V zero current position (although at a much reduced amplitude). This waveform is then passed onto the differential amplifier stage.

1) The circuit (21) around OP1' is the differential amplifier stage. Its purpose is to remove the 6VDC offset, thus bringing the position of the waveform down to the OV electronic power supply. VR1' serves to set the differential to 6V while R1', 2', 3' and 4' set the gain of the circuit to unity. The subsequent output is AC coupled by C3 to remove any DC Bias.

2) The circuit (22) around OP2', simply serves to buffer the output from the above. Its configuration is in the non-inverting mode which offers an extremely high input impedance. Again, the subsequent output is AC coupled by C4' to remove any DC Bias, with the inclusion of R5' which acts as a bleed resistor to C4' when zero current is flowing.

3) The circuit (23) around OP3' is the "peak picker" circuit. It functions to find the peak value of the AC or DC stunning waveform and performs a similar function to a half wave DC rectifier. The output from the above enters the non-inverting input of OP3'. The peak amplitude of the waveform is selected via R7', D1 and subsequently stored in C3'.

4) Once again, the circuit (24) around OP4, simply serves to buffer the output from the above. Its configuration is in the non-inverting mode which offers an extremely high input impedance. No AC coupling is required as the output from above is at a DC level.

The output from the entire circuit is then passed onto the multiplexer (30) and subsequently the ADC circuit for processing.

When the tong location sensor (TLC) (13) is enabled, the input (15), and output (33) are connected to the tongs via relay (6). The TLC (13) is shown in detail in Figures 5 and 5a.

Figure 5 is a simplified diagram which illustrates the basic principle of the tong location sensor. The electrical characteristics of the animal are represented by a capacitance (35). The voltage between the tongs is presented to a comparator (26). Voltage source (25) with a source resistance (25') provides a voltage to the tongs when the switch (37) in relay 6 is closed under control 7. Comparator (26) compares the voltage between the inputs (15,33). When the voltage reaches 1V, the comparator (26) switches, as indicated at (27). The time taken between the switch (37) being closed, and the comparator (26) switching is measured by a timer (30), under control from a precise clock source (29). The timer is controlled by a signal from the CPU 1 on control line 91. The measured time is output at (19).

Figure 5a illustrates a specific embodiment of the tong location sensor shown in Figure 5. The components (40,41,42) and the 1.25V reference Zener Diode (25) gives a precision source voltage of 1 volt to one side of the tongs via the analogue switch (37). The animal's Capacitance together with the source resistance of the 1 volt reference forms a RC network, which forms an exponential curve as the small capacitance of the animal charges up ultimately to reach the 1 volt reference. Thus the time taken for this to occur can then be calculated and the capacitance and ultimately the location of the tongs can be deduced. When the return line (33) reaches 1V, the output (28) swings high (as indicated at 27). The time taken for the output (28) to swing high is measured by a timer (30) and clock source (29). The clock (29) (operating at 1MHz) resets the 1μs timer (30) to zero when the TLC is enabled, and counts up in μs units until the output (28) goes high. The timer (30) is then stopped, and the output (19) is fed to the CPU (1).

The count process is repeated a number of times and a standard deviation analysis is carried out by the CPU1 to arrive at a final average count value which is then compared to a look-up table in the CPU 1. The LUT contains certain ranges of values which are associated with the times expected for the various species and tong locations. Typical capacitance values are in the sub-picofarad range.

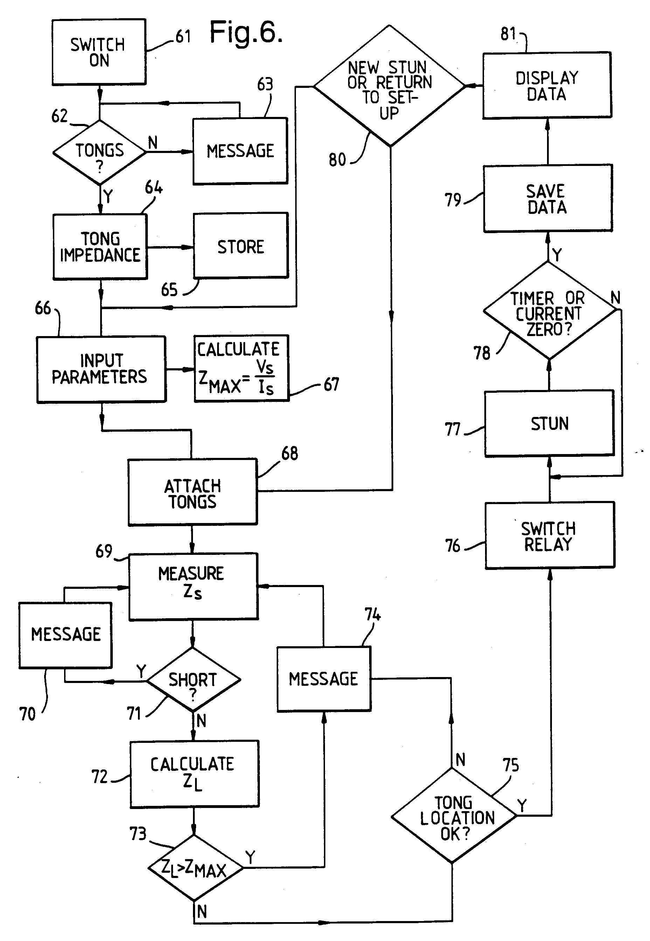

A first example of a method according to according to the second and fourth aspects of the present invention will now be described with reference to the flow diagram shown in Figure 6.

The unit is switched on (61) and the system looks to see if the tongs are inserted into the relay (6) (62).

If not, then a message (63) comes on the VDU requesting the insertion. If inserted the program continues.

The operator connects the tongs together via a known load resistance, and a measurement (64) of the impedance of the tongs is performed and stored (65) as an offset to the eventual impedance of the animal.

A system set-up screen is displayed on a monitor (not shown) in which the operator is requested to input (66) a number of parameters as follows.

1) The day's date is displayed.

2) The time is displayed and frozen until the parameters below have been entered, when it will continue to run at the correct time.

3) The option to view stuns from previous days and their respective stun time is given. Yes takes you into that option or to continue with the selection of new stun parameters.

4) Prompts for the species of animal being stunned. The operator inputs the species. This allows the CPU1 to load the appropriate LUT for the tong location sensor, and the percentage increase factor for the impedance sensor.

5) The operator may also input the desired tong location.

6) The timer (92) can be set from between 0 (off) to 9 seconds. When set to off, a stun cycle initiated, the stun voltage will be continuously applied until the tongs are removed, sensed by the current dropping to below 30 ma. When set to a value from 1 to 9 seconds, and a stun cycle initiated, the stun voltage is applied for the timed period or until the tongs are removed within that period as for the off timer option.

7) The operator may now select the current value which he wishes to use, via current selection circuit (90). As per the MAFF's recommendations, and that of the EEC the minimum is set to 1 Ampere. However this figure may create problems with the vast majority of slaughterhouses as their stunning equipment shall not be able to supply a current of 1 Ampere. Therefore, it is important to allow this to be set by the operator.

8) Finally a reminder of the available stun voltage is shown and the option to continue onto the main stun screen or to abort the set up screen is given.

A calculation (67) is performed by the CPU1 based on $Z_{max} = V_s / I_s$ where $Z_{max}$ is the maximum impedance, $V_s$ is the maximum available stun voltage and $I_s$ is the selected current value input at 7). The result is stored.

The operator attaches the tongs to the animal 68, and the system then begins the impedance sensing (69), i.e. by applying the impedance sensing voltage to the tongs (5,5') after suitably setting the relay (6).

The sensed impedance $Z_s$ of the subject under load is compared (71) with that of a short circuit or other possible dangerous situation.

If a possible hazard exists, the system displays a warning (70) and aborts. If OK the program continues.

From the sensed impedance the offset value of the tongs (stored at 65) is deducted. A comparison (73) is then made between the maximum impedance $Z_{max}$ stored at (67) and the calculated load impedance $Z_L$ of the animal. $Z_L$ is calculated as a percentage of $Z_s$ by prediction means 93. This has been determined by empirical measurement as a 12% increase for pigs, and an 8% increase for sheep (i.e. $Z_L = 1.12 Z_S$ for pigs and $Z_L = 1.08 Z_S$ for sheep).

If $Z_L$ is equal to or lower than the maximum impedance $Z_{max}$ the program continues, otherwise a message (74) appears requesting the operator to either reduce the impedance of the animal by water saturation, increase the available voltage, or select a lower current setting. Whichever of these options are taken, the system returns back to the impedance sensing (69). The sensed impedance may also be compared to the impedance expected for the species of animal being stunned, and the particular stun location. Typical values for pigs and sheep are 205 Ohms across the head, and 1200 Ohms head to back.

The CPU1 then initiates the tong location sensor via control signals (7,31) and timer control (91), connecting the TLC (13) to the tongs. In this example, the desired tong location (for instance the head) has been entered at (66). If the signal (19) from the tong location sensor (13) indicates that the tongs are in the desired location, then the process continues. If not the system aborts, shows a warning message (74) and returns to impedance sensing (69).

If all parameters are correct, the tong location sensor (13) is switched off by the CPU1 and the stun voltage switched on (77) by connecting the stun unit (4) to the tongs via the relay (6).

The current sensed by the sensor (10) is input to ADC (11), and the current is monitored (78) and compared with zero. If the current is zero the stun is complete and the data saved (79).

If the current is not zero the system looks to see if a timed stun was selected, if so it continues the stun until the timer has timed out or if the current flow reduces to zero (78).

If the timer was set to off (i.e. continuous stun), the stun will be terminated when the current flow has reduced to zero i.e. the tongs have been removed.

Once the stun has been concluded (as opposed to aborted) the data for all of the stun parameters is saved (79) onto a hard disk under the time of that data with the extension date. The system then displays the data (81) on a graph, the Y Axis being the current flow measured vs the X Axis being the time scale. Other parameters saved and displayed include:-

The date of the stun.

The time of the stun.

The species being stunned.

The current attained within one second (found by averaging the first second' s current data).

Any interruptions to the stun (indicated by a sudden dip and rise in current flow by the tongs slipping).

The selected timer value.

The selected current setting.

The impedance sensed.

At all times the operator may return to the set-up screen (66) to change relevant parameters and have the facility to backup the data onto a floppy disk. Assuming these options have not been selected the system resets itself and returns to impedance sensing.

The microprocessor (1) stores the data to floppy disc, and at the end of a batch the disc is replaced. Each disc holds approximately 3000 stuns. The disc may be kept for inspection by the veterinarian and viewed on any 6800 processor or IBM compatible PC. It may be viewed on the unit itself but this could hold up operation.

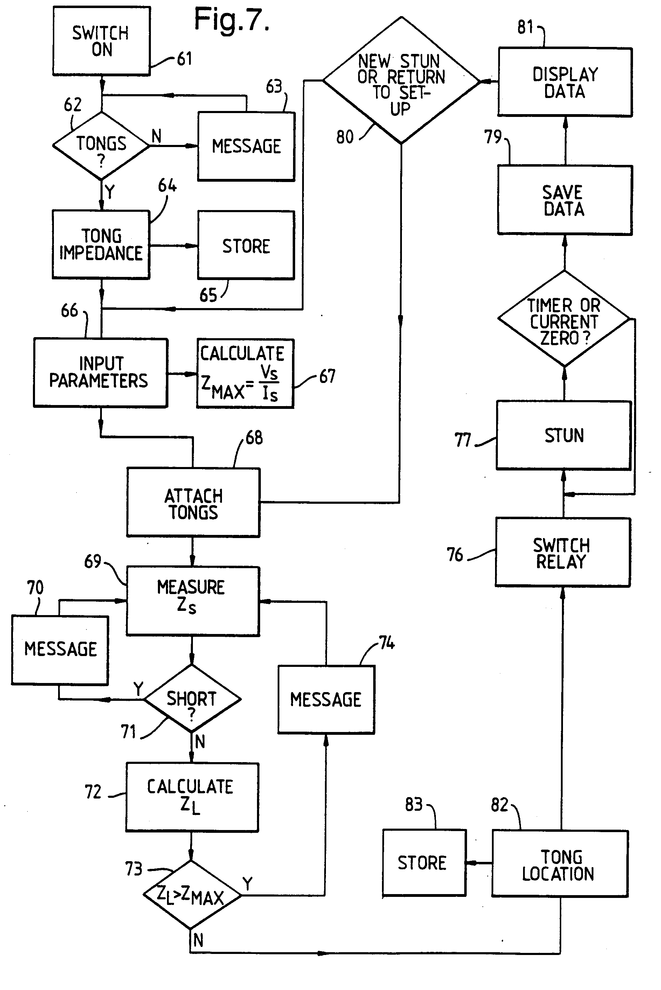

An alternative stun cycle is illustrated in Figure 7 where steps equivalent to those in Figure 6 have the same reference numbers. In this example, the stun voltage is applied at (77) regardless of the measurement from the tong location sensing step (82). This location is merely stored at (83) and displayed along with the other data at (81). Therefore, the stun will proceed regardless of the positioning of the tongs, but the operator will be informed of any incorrect positioning at the end of the stun, or batch of stuns. This removes the need to perform a number of reclamping operations on the animal, which may cause it a significant amount of stress.

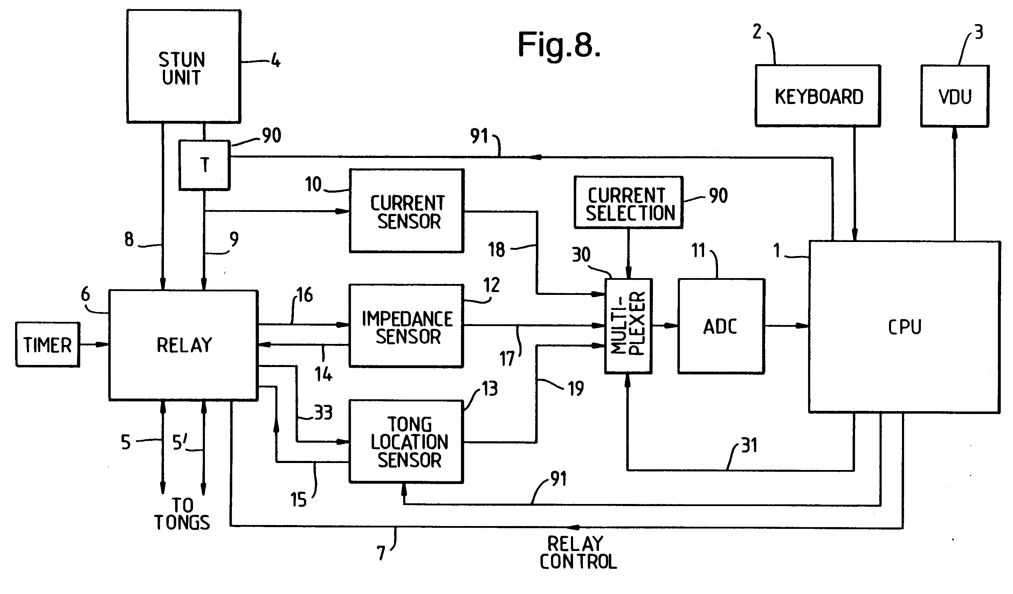

An alternative example of the stunning apparatus is shown in Figure 8. As opposed to the example in Figure 1 in which fixed voltage is applied to the tongs, in Figure 8 a triac or inverse parallel thyristor (90) is included to control the applied stun voltage, in response to a control signal (91) from the CPU. This ensures that the applied current remains above a predetermined level throughout the duration of the stun - increasing the applied voltage if necessary.

## Claims

1. Apparatus for controlling the application of stun/kill voltage to an animal comprising means (5,5') for applying a voltage to the animal characterised in that the apparatus comprises means (12) to sense the impedance of the animal in response to the application of an impedance sensing voltage by the voltage applying means, the impedance sensing voltage being less than the stun/kill voltage; means (1) for predicting, from the sensed impedance, the impedance of the animal when the stun/kill voltage is applied; and means (1,6) for controlling the application of stun/kill voltage such that the stun/kill voltage is only applied if the predicted impedance is less than a predetermined impedance.

2. Apparatus according to claim 1, wherein the impedance sensing means (12) comprises part of a potential divider circuit of which the animal forms the remaining part in use.

3. Apparatus according to claim 1 or 2, wherein the impedance sensing voltage comprises an AC voltage.

4. Apparatus according to claim 3, wherein the voltage applying means comprises a Schmitt trigger oscillator which generates the impedance sensing voltage.

5. Apparatus according to claim 3 or 4, wherein the impedance sensing means comprises a plurality of passive components which have a maximum operational frequency value of the order of the frequency of the AC voltage.

6. Apparatus according to any of claims 3 to 5 wherein the waveform of the impedance sensing voltage approximates a sine wave with strong triangular components.

7. Apparatus according to any of claims 1 to 6, wherein the impedance sensing voltage is less than 24 volts RMS, and the stun/kill voltage is greater than 24 volts RMS.

8. Apparatus according to any of claims 1 to 7, wherein the means (1) for predicting the impedance of the animal when the stun/kill voltage is applied comprises means for multiplying the sensed impedance by a predetermined factor.

9. Apparatus for sensing the position of a pair of electrodes (5,5') on an animal's body comprising means for sensing an electrical characteristic of the animal by measuring the electrical response of the animal to an electrical signal applied by the electrodes characterised in that the apparatus comprises means (13) to provide an indication of the position of the electrodes in accordance with the measured response.

10. Apparatus according to claim 9 wherein the electrical characteristic is related to the reactance.

11. Apparatus according to claim 10 wherein the electrical characteristic is the capacitance.

12. Apparatus according to claim 10 or 11, further comprising means (25) to apply a fixed voltage to one of the electrodes; means (26) for determining the voltage between the electrodes; and means (30) to measure the time taken for the voltage between the electrodes to reach a predetermined value.

13. Apparatus according to any of claims 9 to 12, wherein the position of the electrodes is determined by comparing the value of the measured response with a predetermined range of values associated with a known electrode position.

14. Apparatus according to claim 13 wherein the known electrode position is across the animal's head.

15. Apparatus according to claim 13 wherein the known electrode position is between the animal's head and back.

16. Apparatus according to any of claims 13 to 15, wherein the predetermined range of values is one of a number of predetermined ranges, each associated with a different electrode position.

17. Apparatus according to any of claims 9 to 16, further comprising means (4) for applying stun/kill voltage between the electrodes; and means (1,6) for controlling the applied stun/kill voltage such that the stun/kill voltage is only applied if the electrodes are in a predetermined position.

18. Apparatus for controlling the application of stun/kill voltage to an animal according to any of claims 1 to 8, wherein the means for applying the voltage to the animal comprises a pair of electrodes, the apparatus further comprising means for sensing the position of the pair of electrodes on the animal's body according to any of claims 9 to 17.

19. A method of controlling the application of stun/kill voltage to an animal comprising applying (69) an impedance sensing voltage to the animal, the impedance sensing voltage being less than the stun/kill voltage; sensing (69) the impedance of the animal in response to the impedance sensing voltage; predicting (72), from the sensed impedance, the impedance of the animal when the stun/kill voltage is applied; and controlling (73) the application of stun/kill voltage such that the stun/kill voltage is only applied if the predicted impedance is less than a predetermined impedance.

20. A method of sensing the position of a pair of current applying electrodes on an animal's body comprising applying an electrical signal to the animal via the electrodes; and sensing an electrical characteristic of the animal by measuring the electrical response of the animal to the electrical signal characterised in that the method further comprises providing an indication of the electrode position in accordance with the measured response.

**Patentansprüche**

1. Vorrichtung zum Steuern des Anlegens von Betäubungs-/Tötungsspannung an ein Tier, umfassend Mittel (5, 5') zum Anlegen einer Spannung an ein Tier, dadurch gekennzeichnet, daß die Vorrichtung Mittel (12), um die Impedanz des Tieres aufgrund des Anlegens einer Impedanzabtastspannung durch die Spannungsanlegemittel abzutasten, wobei die Impedanzabtastspannung geringer als die Betäubungs-/Tötungsspannung ist; Mittel (1) zum Vorhersagen, ausgehend von der abgetasteten Impedanz, der Impedanz des Tieres, wenn die Betäubungs-/Tötungsspannung angelegt wird; und Mittel (1, 6) zum Steuern des Anlegens von Betäubungs-/Tötungsspannung, so daß die Betäubungs-/Tötungsspannung nur angelegt wird, wenn die vorhergesagte Impedanz kleiner als eine vorbestimmte Impedanz ist, umfaßt.

2. Vorrichtung nach Anspruch 1, bei der die Impedanzabtastmittel (12) einen Teil eines Spannungsteilerschaltkreises bilden, von dem im Einsatz das Tier den verbleibenden Teil bildet.

3. Vorrichtung nach Anspruch 1 oder 2, bei der die Impedanzabtastspannung eine Wechselspannung aufweist.

4. Vorrichtung nach Anspruch 3, bei der die Spannungsanlegungsmittel einen Schmitt-Träger-Oszillator aufweisen, der die Impedanzabtastspannung erzeugt.

5. Vorrichtung nach Anspruch 3 oder 4, bei der die Impedanzabtastmittel eine Mehrzahl passiver Komponenten aufweisen, die einen maximalen Betriebsfrequenzwert in der Größenordnung der Frequenz der Wechselspannung haben.

6. Vorrichtung nach einem der Ansprüche 3 bis 5, bei der die Wellenform der Impedanzabtastspannung eine Sinuswelle mit starken Dreieckskomponenten annähert.

7.  Vorrichtung nach einem der Ansprüche 1 bis 6, bei dem die Impedanzabtastspannung kleiner als 24 Volt RMS und die Betäubungs-/Tötungsspannung größer als 24 Volt RMS ist.

8.  Vorrichtung nach einem der Ansprüche 1 bis 7, bei dem die Mittel (1) zum Vorhersagen der Impedanz des Tieres, wenn die Betäubungs-/Tötungsspannung angewandt wird, Mittel zum Multiplizieren der abgetasteten Impedanz mit einem vorbestimmten Faktor umfassen.

9.  Vorrichtung zum Abtasten der Position eines Elektrodenpaars (5, 5') auf einem Tierkörper, umfassend Mittel zum Abtasten einer elektrischen Eigenschaft des Tieres durch Messen der elektrischen Antwort des Tieres auf ein elektrisches Signal, das durch die Elektroden angelegt wird, dadurch gekennzeichnet, daß die Vorrichtung Mittel (13) umfaßt, um eine Angabe der Position der Elektroden in Übereinstimmung mit der gemessenen Antwort zu liefern.

10. Vorrichtung nach Anspruch 9, bei der die elektrische Eigenschaft mit der Reaktanz in Beziehung steht.

11. Vorrichtung nach Anspruch 10, bei der die elektrische Eigenschaft die Kapazität ist.

12. Vorrichtung nach Anspruch 10 oder 11, außerdem umfassend Mittel (25), um eine feste Spannung an eine der Elektroden anzulegen; Mittel (26) zum Bestimmen der Spannung zwischen den Elektroden; und Mittel (30), um die Zeit, die für die Spannung zwischen den Elektroden genommen wird, um einen vorbestimmten Wert zu erreichen, zu messen.

13. Vorrichtung nach einem der Ansprüche 9 bis 12, bei der die Position der Elektroden bestimmt ist durch Vergleichen des Wertes der gemessenen Antwort mit einem vorbestimmten Bereich von Werten, der einer bekannten Elektrodenposition zugeordnet ist.

14. Vorrichtung nach Anspruch 13, bei der die bekannte Elektrodenposition über dem Kopf des Tieres ist.

15. Vorrichtung nach Anspruch 13, bei der die bekannte Elektrodenposition zwischen dem Kopf und dem Rücken des Tieres ist.

16. Vorrichtung nach einem der Ansprüche 13 bis 15, bei der der vorbestimmte Bereich von Werten einer einer Anzahl von vorbestimmten Bereichen ist, deren jeder einer verschiedenen Elektrodenposition zugeordnet ist.

17. Vorrichtung nach einem der Ansprüche 9 bis 16, außerdem umfassend Mittel (4) zum Anlegen von Betäubungs-/Tötungsspannung zwischen den Elektroden; und Mittel (1, 6) zum Steuern der angelegten Betäubungs-/Tötungsspannung, so daß die Betäubungs-/Tötungsspannung nur angelegt wird, wenn die Elektroden in einer vorbestimmten Position sind.

18. Vorrichtung zum Steuern der Anwendung von Betäubungs-/Tötungsspannung auf ein Tier gemäß einem der Ansprüche 1 bis 8, bei der die Mittel zum Anlegen der Spannung an das Tier ein Elektrodenpaar umfassen, wobei die Vorrichtung außerdem Mittel zum Abtasten der Position des Elektrodenpaars auf dem Tierkörper gemäß einem der Ansprüche 9 bis 17 aufweist.

19. Verfahren zum Steuern des Anlegens von Betäubungs-/Tötungsspannung an ein Tier, umfassend Anlegen (69) einer Impedanzabtastspannung an das Tier, wobei die Impedanzabtastspannung geringer als die Betäubungs-/Tötungsspannung ist, Abtasten (69) der Impedanz des Tieres aufgrund der Impedanzabtastspannung; Vorhersagen (72), ausgehend von der abgetasteten Impedanz, der Impedanz des Tieres, wenn die Betäubungs-/Tötungsspannung angelegt wird; und Steuern (73) des Anlegens von Betäubungs-/Tötungsspannung, so daß die Betäubungs-/Tötungsspannung nur angelegt wird, wenn die vorhergesagte Impedanz geringer als eine vorherbestimmte Impedanz ist.

20. Verfahren zum Abtasten der Position eines Paares von Strom anlegenden Elektroden auf einem Tierkörper, umfassend Anlegen eines elektrischen Signals an das Tier über die Elektroden; und Abtasten einer elektrischen Eigenschaft des Tieres durch Messen der elektrischen Antwort des Tieres auf das elektrische Signal, dadurch gekennzeichnet, daß das Verfahren außerdem Liefern einer Angabe der Elektrodenposition in Übereinstimmung mit der gemessenen Antwort umfaßt.

**Revendications**

1. Appareil de contrôle de l'application d'une tension d'étourdissement/abattage à un animal, comportant des moyens (5, 5') en vue d'appliquer une tension à l'animal, caractérisé en ce que l'appareil comporte des moyens (12) pour détecter l'impédance de l'animal en réponse a l'application d'une tension de détection d'impédance par les moyens d'application de tension, la tension de détection d'impédance étant inférieure à la tension d'étourdissement/abattage; des moyens (1) afin de prédire, à partir de l'impédance détectée, l'impédance de l'animal lorsque la tension d'étourdissement/abattage est appliquée; et des moyens (1, 6) pour contrôler l'application de la tension d'étourdissement/abattage de telle sorte que la tension d'étourdissement/abattage n'est appliquée que si l'impédance prédite est inférieure à une impédance prédéterminée.

2. Appareil selon la revendication 1, dans lequel les moyens de détection d'impédance (12) constituent une partie d'un circuit diviseur de potentiel dont l'animal constitue la partie restante en utilisation.

3. Appareil selon la revendication 1 ou 2, dans lequel la tension d'impédance est une tension alternative.

4. Appareil selon la revendication 3, dans lequel les moyens d'application de tension comportent un oscillateur à bascule de Schmitt qui génère la tension de détection d'impédance.

5. Appareil selon la revendication 3 ou 4, dans lequel les moyens de détection d'impédance comportent une pluralité de composants passifs qui possèdent une valeur de fréquence de fonctionnement maximum de l'ordre de la fréquence de la tension alternative.

6. Appareil selon l'une quelconque des revendications 3 à 5, dans lequel la forme d'onde de la tension de détection d'impédance s'approche d'une onde sinusoïdale avec des composantes fortement triangulaires.

7. Appareil selon l'une quelconque des revendications 1 à 6, dans lequel la tension de détection d'impédance est inférieure à 24 V efficaces, et la tension d'étourdissement/abattage est supérieure à 24 V efficaces.

8. Appareil selon l'une quelconque des revendications 1 à 7, dans lequel les moyens (1) en vue de prédire l'impédance de l'animal lorsque la tension d'étourdissement/abattage est appliquée, comportent des moyens pour multiplier l'impédance détectée par un facteur prédéterminé.

9. Appareil en vue de détecter la position d'une paire d'électrodes (5, 5') sur le corps d'un animal, comportant des moyens pour détecter une caractéristique électrique de l'animal en mesurant la réponse électrique de l'animal à un signal électrique appliqué par les électrodes, caractérisé en ce que l'appareil comporte des moyens (13) pour fournir une indication de la position des électrodes conformément à la réponse mesurée.

10. Appareil selon la revendication 9, dans lequel la caractéristique électrique est liée à la réactance.

11. Appareil selon la revendication 10, dans lequel la caractéristique électrique est la capacité.

12. Appareil selon la revendication 10 ou 11, comportant en outre des moyens (25) pour appliquer une tension fixe à l'une des électrodes; des moyens (26) pour déterminer la tension entre les électrodes; et des moyens (30) pour mesurer le temps pris la tension entre les électrodes pour atteindre une valeur prédéterminée.

13. Appareil selon l'une quelconque des revendications 9 à 12, dans lequel la position des électrodes est déterminée en comparant la valeur de la réponse mesurée à une plage prédéterminée de valeurs associées à une position d'électrode connue.

14. Appareil selon la revendication 13, dans lequel la position d'électrode connue se trouve aux bornes de la tête de l'animal.

15. Appareil selon la revendication 13, dans lequel la position d'électrode connue se trouve entre la tête et le dos de l'animal.

16. Appareil selon l'une quelconque des revendications 13 à 15, dans lequel la plage déterminée de valeurs est l'une d'une pluralité de plages prédéterminées, associées chacune à une position d'électrode différente.

**17.** Appareil selon l'une quelconque des revendications 9 à 16, comportant en outre des moyens (4) pour appliquer la tension d'étourdissement/abattage entre les électrodes; et des moyens (1, 6) pour commander la tension d'étourdissement/abattage appliquée de telle sorte que la tension d'étourdissement/abattage est uniquement appliquée si les électrodes se trouvent dans une position prédéterminée.

**18.** Appareil en vue de contrôler l'application de la tension d'étourdissement/abattage à un animal selon l'une quelconque des revendications 1 à 8, dans lequel les moyens d'application à l'animal comportent une paire d'électrodes, l'appareil comportant en outre des moyens pour détecter la position de la paire d'électrodes sur le corps de l'animal selon l'une quelconque des revendications 9 à 17.

**19.** Procédé de contrôle de l'application de la tension d'étourdissement/abattage à un animal comportant l'application (69) d'une tension de détection d'impédance à l'animal, la tension de détection d'impédance étant inférieure à la tension d'étourdissement/abattage; la détection (69) de l'impédance de l'animal en réponse à la tension de détection d'impédance; la prédiction (72), à partir de l'impédance détectée, de l'impédance de l'animal lorsque la tension d'étourdissement/abattage est appliquée; et le contrôle (73) de l'application de la tension d'étourdissement/abattage de telle sorte que la tension d'étourdissement/abattage n'est seulement appliquée que si l'impédance prédite est inférieure à une impédance prédéterminée.

**20.** Procédé de détection de la position d'une paire d'électrodes d'application de courant sur le corps d'un animal comportant l'application d'un signal électrique à l'animal par l'intermédiaire des électrodes; et la détection d'une caractéristique électrique de l'animal par mesure de la réponse électrique de l'animal au signal électrique, caractérisé en ce que le procédé comporte en outre la délivrance d'une indication de la position d'électrode conformément à la réponse mesurée.

Fig.1.

Fig.2.

TONG 5 · IMPEDANCE SENSOR

TONG 5'

14 16

R1 1K
VR1 100K

12V+ ON PCB

HT1 13 6 DegC HEATSINK
L465 OP1

C1 100uF 25V ELECT
C3 100pF POLYSTY

D1 OA47
R2 100K

R3 1K

0V ON PCB

VR3 1K
C4 CLOSE TOL POLYSTY 1nF
VR4 100K

R4 1K

C2 100uF 25V ELECT

VR2 10K
ZD1 BZX55CV1

12V- ON PCB

17

TO MULTIPLEXER 30

EP 0 722 270 B1

Fig.3.

TO IMPEDANCE SENSOR

TO TONG LOCATION SENSOR

ADC CONVERTER

# Fig.4.

CURRENT SENSOR

EP 0 722 270 B1

# Fig.5.

# Fig.5a.

TONG LOCATION SENSOR

XT1
1MHZ

29

IC1

R1
470R

R2
470R

IC1

IC1

IC1

1/6 74LS04

C1
10nF

1/6 74LS04

1/6 74LS04

C2
100nF

+5V

IC2

30

IC3

30

IC4

BEGIN COUNT

91

END
COUNT

COUNT FINISHED

RESET COUNTER
AND FLIP FLOP

BINARY
COUNT
TO PORTF

19

REACHED IV

27

28

TO IMPEDANCE CIRCUITRY

37

+5V

IC5

IMPEDANCE OUT

IV RETURN

-5V

IV TLC OUT

15

33

TO
TONGS

33

40

+5V

10K

C3
1nF

(CAL
FOR IV)
VR1
5K

25

41

42

3

7

VCC

6

2

4

VDD

26

38

R4
1K

EP 0 722 270 B1

# Fig.6.

SWITCH ON — 61

62 ── TONGS ? ── N ── MESSAGE — 63

Y ↓

TONG IMPEDANCE — 64 ── STORE — 65

66 ── INPUT PARAMETERS ── CALCULATE $Z_{MAX} = \dfrac{V_s}{I_s}$ — 67

ATTACH TONGS — 68

69 ── MEASURE $Z_s$

MESSAGE — 70 ── Y ── SHORT ? — 71

N ↓

72 ── CALCULATE $Z_L$

73 ── $Z_L > Z_{MAX}$ ── Y

N

MESSAGE — 74

75 ── TONG LOCATION OK? ── N / Y

80 ── NEW STUN OR RETURN TO SET-UP ── DISPLAY DATA — 81

79 ── SAVE DATA

Y ↑

78 ── TIMER OR CURRENT ZERO? ── N

77 ── STUN

76 ── SWITCH RELAY

19

# Fig.7.

SWITCH ON — 61

62
TONGS ? — N → MESSAGE — 63

Y

64
TONG IMPEDANCE → STORE
65

66
INPUT PARAMETERS → CALCULATE $Z_{MAX} = \dfrac{V_s}{I_s}$ — 67

68
ATTACH TONGS

69
MEASURE $Z_s$

70
MESSAGE

SHORT ? — Y
71
N

72
CALCULATE $Z_L$

74
MESSAGE

73
$Z_L > Z_{MAX}$ — Y
N

80
NEW STUN OR RETURN TO SET-UP

81
DISPLAY DATA

79
SAVE DATA

TIMER OR CURRENT ZERO ?

77
STUN

76
SWITCH RELAY

82
TONG LOCATION → STORE — 83

Fig.8.